# EUROPÄISCHE PATENTSCHRIFT

(11) **EP 2 325 502 B1**
(45) Veröffentlichungstag und Bekanntmachung des Hinweises auf die Patenterteilung: **29.07.2015**
(21) Anmeldenummer: 10191628.6
(22) Anmeldetag: 18.11.2010
(51) Int. Cl.: F16B 5/10, F16B 7/20, F16B 21/04

(54) **Anordnung und Verfahren zum Verbinden eines Zubehörteils mit einem Operationstisch**
Assembly and method for connecting an accessory with an operating table
Agencement et procédé pour relier un accessoire avec une table d'opération

(30) Priorität: 19.11.2009 DE 102009053966
(43) Veröffentlichungstag der Anmeldung: 25.05.2011
(73) Patentinhaber: MAQUET GmbH, 76437 Rastatt (DE)
(72) Erfinder: Olszewski, Jan Donat, 76437, Rastatt (DE)
(74) Vertreter: Schaumburg & Partner Patentanwälte (GbR)

(56) Entgegenhaltungen:
- FR-A1- 2 713 725

## Beschreibung

Die Erfindung betrifft eine Anordnung und ein Verfahren zum Verbinden eines Zubehörteils mit einem Operationstisch. Mit bekannten Operationstischen sind eine Vielzahl unterschiedlicher Zubehörteile über jeweils mindestens eine lösbare Verbindung verbindbar. Solche Zubehörteile sind insbesondere Kopfplatten, Schädelklemmen, Beinplatten, Extensionsaggregate sowie Liegeflächenverbreiterungen.

Aus dem Dokument EP 1 785 119 B1 ist ein Operationstisch bekannt, bei dem als Segmente bezeichnete Zubehörteile mit dem Operationstisch verbunden sind. Mit Hilfe von Zubehörteilen können Operationstische an den geplanten Eingriff und/oder an den spezifischen zu operierenden Patienten angepasst werden.

Aus dem Dokument FR 2 713 725 A1 ist eine Bajonettverschlussvorrichtung zur Verwendung insbesondere für wenig zugängliche Stellen einer Maschine bekannt, wobei der Weg zwischen einem Nocken und dem Scheitelpunkt der Nut, in der dieser Nocken eingreift, für wenigstens einen Nocken derart ausgebildet ist, dass sich während des Anbringens des Verschlussstücks die Wahrscheinlichkeit verringert, dass dieses Verschlussstück in der Nähe der Scheitelpunkte in einem metastabilen Zustand auf den Nocken verbleibt. Somit weist diese Vorrichtung die Merkmale des Oberbegriffs von Anspruch 1 bzw. Anspruch 10 auf.

Bekannte Zubehörteile für Operationstische haben den Nachteil, dass das Anbringen des jeweiligen Zubehörteils in mehreren Handhabungsschritten erfolgen muss oder, wenn es sich um lösbare Rastverbindungen handelt, diese Verbindungen nicht spielfrei sind. Vielmehr muss das Spiel in der Verbindung durch einen weiteren Bedienvorgang, wie das Betätigen einer Griffschraube oder ähnlichem, beseitigt werden.

Ausgehend von diesem Stand der Technik liegt der Erfindung die Aufgabe zugrunde, eine Anordnung und eine Vorrichtung zum Verbinden eines Zubehörteils mit einem Operationstisch anzugeben, bei dem die Verbindung zwischen Zubehörteil und Operationstisch einfach hergestellt und ein Spiel zwischen dem Zubehörteil und dem Operationstisch vermieden wird.

Diese Aufgabe wird durch eine Anordnung mit den Merkmalen des Patentanspruchs 1 und durch ein Verfahren mit den Merkmalen des Patentanspruchs 10 gelöst. Vorteilhafte Weiterbildungen der Erfindung sind in den abhängigen Patentansprüchen angegeben.

Bei der Anordnung nach Anspruch 1 und bei dem erfindungsgemäßen Verfahren wird durch die auf das Eingriffselement ausgeübte Kraft und durch den Verlauf der im Aufnahmebereich vorgesehenen Führungsbahn bei einer Verbindung zwischen dem Zubehörteil und dem Operationstisch eine in Einführrichtung wirkende Kraft auf das Verbindungselement ausgeübt. Durch diese Kraft kann ein Spiel zwischen dem Verbindungselement und dem Aufnahmebereich und somit zwischen dem Zubehörteil und dem Operationstisch vermieden werden. Allgemein wird als Spiel die Bewegungsfreiheit von zwei ineinander greifenden Teilen angesehen, im vorliegendem Fall die Bewegungsfreiheit zwischen dem Verbindungselement und dem Aufnahmebereich bzw. zwischen dem Zubehörteil und dem Operationstisch.

Ist bei einer Weiterbildung ein Anschlagselement vorgesehen, das eine weitere Bewegung des Verbindungselements in Einführrichtung im verbundenen Zustand verhindert, bewirkt die in Einführrichtung wirkende Kraft, dass das Verbindungselement mit dieser Kraft gegen den Anschlag gedrückt und dadurch gegebenenfalls vorhandenes Spiel zwischen dem Verbindungselement und dem Aufnahmebereich beseitigt wird.

Es ist vorteilhaft, das Verbindungselement als Zapfen und den Aufnahmebereich als Buchse auszubilden. Der Zapfen ist dann in die Buchse einführbar. Dabei ist bei einer bevorzugten Ausführungsform das in die Buchse einzuführende Ende des Zapfens verjüngt, beispielsweise in Form einer umlaufenden Fase. Durch die Verjüngung des Endes wird das Einführen des Verbindungselements in die Buchse erleichtert. Dadurch wird eine einfache Handhabung des Zubehörteils beim Verbinden mit dem Operationstisch erreicht.

Der Anschlag kann beispielsweise durch einen ersten Kontaktbereich des Verbindungselements und/oder des Zubehörteils und durch einen zweiten Kontaktbereich des Aufnahmebereichs und/oder des Operationstisches gebildet werden, wobei die in Einführrichtung auf das Verbindungselement wirkende Kraft den ersten Kontaktbereich gegen den zweiten Kontaktbereich drückt. Dabei kann einer der Kontaktbereiche durch zumindest einen Teil der Mantelfläche eines Kegelstumpfs gebildet sein, dessen Längsachse parallel zur Einführrichtung verläuft. In einem verbundenen Zustand des Zubehörteils mit dem Operationstisch ist der jeweils andere Kontaktbereich zumindest in einem Teilbereich komplementär zu dem durch die Mantelfläche des Kegelstumpfs gebildeten Kontaktbereich ausgebildet. Alternativ kann im verbundenen Zustand des Zubehörteils mit dem Operationstisch der jeweils andere Kontaktbereich als zylindrische Öffnung ausgebildet sein, so dass der als Kegelstumpf ausgebildete Kontaktbereich durch den jeweils anderen Kontaktbereich zentriert wird. Ist der Kontaktbereich des Verbindungselements an dem in den Aufnahmebereich eingeführten Ende des Verbindungselements, kann der erste oder zweite Kontaktbereich auch als Kegel ausgebildet sein, der in einer durch den zweiten Kontaktbereich gebildeten kegelförmigen, kegelstumpfförmigen oder zylindrischen Öffnung aufgenommen und zentriert wird. Weiterhin ist es vorteilhaft, wenn die im Aufnahmebereich vorgesehene Führungsbahn einen ersten ansteigenden Bereich hat, durch den beim Einführen des Verbindungselements in den Aufnahmebereich eine Drehung des Eingriffselements um eine parallel zur Einführrichtung verlaufenden Drehachse in eine erste Drehrichtung erfolgt, wobei das elastisch verformbare Element beim Drehen des Eingriffselements in die erste Drehrichtung verformt wird. Die Führungsbahn hat vorzugsweise einen zweiten abfallenden Bereich, durch die das Eingriffselement nach dem Passieren des ersten Bereichs in eine zur ersten Drehrichtung entgegen gesetzten zweiten Drehrichtung gedreht wird. Dabei übt das elastisch verformte Element eine Kraft über das Eingriffselement und die Führungsbahn auf den Aufnahmebereich aus. Diese Kraft lässt sich in eine axiale Kraft in Einführrichtung und in eine radiale Kraft in die zweite Drehrichtung zerlegen. Durch die in Einführrichtung wirkende Kraft wird das Verbindungselement im Aufnahmebereich gehalten und/oder in den Aufnahmebereich hinein gezogen. Dadurch wird ein sicherer Halt des Verbindungselements im Aufnahmebereich erreicht und Spiel zwischen dem Verbindungselement und dem Aufnahmebereich vermieden.

Besonders vorteilhaft ist es, wenn ein Element vorgesehen ist, das eine Drehung des Verbindungselements relativ zum Aufnahmebereich verhindert. Dadurch wird sichergestellt, dass keine Rotationen des Verbindungselements selbst beim Einführen in den Aufnahmebereich erfolgt, sondern lediglich eine Drehung des Eingriffselements relativ zum übrigen Verbindungselement und/oder zum Zubehörteil, so dass das elastische Element schon beim Einführen des Verbindungselements in den Aufnahmebereich verformt wird.

Das elastische Element kann insbesondere eine Feder, wie eine Torsionsfeder, sein, die beim Einführen des Verbindungselements in den Aufnahmebereich gespannt oder alternativ durch eine Drehung des Verbindungselements nach dem Einführen des Verbindungselements in den Aufnahmebereich gespannt wird.

Bei einer bevorzugten Ausführungsform wird das Element, das eine Drehung des Verbindungselements relativ zum Aufnahmebereich verhindert, durch mindestens ein zweites mit dem Zubehörteil verbundenes Aufnahmeelement sowie durch einen zweiten im Bauteil des Operationstisches oder in einem weiteren Bauteil des Operationstisches ausgebildeten Aufnahmebereich gebildet.

Bei einer alternativen Weiterbildung kann das Element, das einer Drehung des Verbindungselements relativ zum Aufnahmebereich verhindert, ein weiteres seitlich aus dem Verbindungselement hervorstehendes Eingriffselement und eine im Aufnahmebereich vorgesehene weitere Führungsbahn umfassen, die sich entlang der Einführrichtung erstreckt.

Alternativ oder zusätzlich kann ein weiteres Eingriffselement vorgesehen sein, das seitlich aus dem Aufnahmebereich vorsteht. Das Eingriffselement greift dann beim Einführen des Verbindungselements in den Aufnahmebereich in eine im Verbindungselement vorgesehene Führungsbahn ein. Die Führungsbahn erstreckt sich parallel zur Einführrichtung. Dadurch kann eine Drehung des Verbindungselements relativ zum Aufnahmebereich beim Einführen des Verbindungselements in den Aufnahmebereich vermieden werden, so dass das elastische Element bereits beim Einführen des Verbindungselements in den Aufnahmebereich verformt wird. Dadurch übt das verformte elastische Element zumindest im eingeführten Zustand eine Kraft in Einführrichtung auf das Verbindungselement aus.

Bei einer weiteren Ausführungsform der Erfindung hat die Führungsbahn, in die das Eingriffselement eingreift, zumindest einen abfallenden Bereich. Beim Einführen des Verbindungselements in den Aufnahmebereich ist das Eingriffselement in der Führungsbahn geführt. Das Verbindungselement ist beim Einführen in den Aufnahmebereich um eine parallel zur Einführrichtung angeordnete Drehachse relativ zum Aufnahmebereich drehbar. Das Verbindungselement wird vorzugsweise mit dem Zubehörteil zusammen gedreht, wenn das Eingriffselement den abfallenden Bereich der Führungsbahn kontaktiert, wodurch das elastisch verformbare Element beim Einführen des Verbindungselement in den Aufnahmebereich nicht oder nur gering elastisch verformt wird. Das Verbindungselement wird vorzugsweise zusammen mit dem Zubehörteil gedreht, wenn das Eingriffselement den abfallenden Bereich der Führungsbahn kontaktiert. Beim Drehen des Verbindungselements in eine erste Drehrichtung, nachdem das Eingriffselement eine Position erreicht hat, in der es den abfallenden Bereich der Führungsbahn kontaktiert, erfolgt eine Verformung des elastisch verformbaren Elements. Das Zubehörteil und/oder das Verbindungselement wird nach dem Drehen des Verbindungselements derart arretiert, dass es zumindest nicht in einer zweiten zur ersten Drehrichtung entgegen gesetzten Drehrichtung drehbar ist. Das elastisch verformte Element übt eine Kraft auf die Führungsbahn aus, durch die eine Kraft in Einführrichtung auf das Verbindungselement wirkt. Dadurch wird erreicht, dass das elastisch verformbare Element erst nach dem Einführen des Verbindungselements in den Aufnahmebereich verformt wird, so dass abhängig vom Anwendungsfall eine alternative Ausführungsform der Erfindung gegenüber der ersten Ausführungsform, bei der das elastisch verformbare Element bereits beim Einführen des Verbindungselements in dem Aufnahmebereich elastisch verformt wird, während das Eingriffselement beim Einführen im ansteigenden Bereich der Führungsbahn in diese eingreift.

Bei einer weiteren bevorzugten Ausführungsform der Erfindung sind mindestens zwei Eingriffselemente vorgesehen, die auf gegenüber liegenden Seiten aus dem Verbindungselement hervorstehen. Die Eingriffselemente sind vorzugsweise durch ein Bauteil gebildet, beispielsweise durch einen zylindrischen Stift, der radial durch das Verbindungselement geführt ist, so dass die Enden des zylindrischen Stifts auf gegenüberliegenden Seiten des Verbindungselements aus diesem hervor stehen.

Ferner ist es vorteilhaft, wenn die auf gegenüberliegenden Seiten hervorstehenden Eingriffselemente in jeweils eine Führungsbahn eingreifen, so dass entsprechend der Anzahl vorstehender Eingriffselemente dieselbe Anzahl Führungsbahnen vorgesehen sind. Bei zwei Eingriffselementen sind somit zwei Führungsbahnen vorgesehen. Die Führungsbahnen haben jeweils mindestens einen abfallenden Bereich und vorzugsweise zusätzlich einen ansteigenden Bereich, wie bereits weiter oben ausführlich erläutert.

Bei einer weiteren bevorzugten Ausführungsform der Erfindung ist ein Hebel vorgesehen, der drehfest mit dem Eingriffselement und/oder den Eingriffselementen verbunden ist. Zum Lösen der Verbindung zwischen dem Verbindungselement und dem Aufnahmebereich ist das Eingriffselement mit Hilfe des Hebels in die erste Drehrichtung drehbar, so dass beim Betätigen des Hebels das Verbindungselement entgegen der Einführrichtung aus dem Aufnahmebereich bewegbar ist. Dadurch ist ein einfaches Lösen der Verbindung zwischen dem Zubehörteil und dem Operationstisch möglich.

Bei einer weiteren bevorzugten Ausführungsform hat das Zubehörteil zwei Verbindungselemente und das Bauteil des Operationstisches zwei Aufnahmebereiche zur Aufnahme jeweils mindestens eines Bereichs eines der Verbindungselemente. Jedes Verbindungselement umfasst mindestens ein Eingriffselement, das jeweils mit einem Hebel drehfest verbunden ist. Mit Hilfe des Hebels sind die Eingriffselemente jeweils entgegen der durch das elastisch verformbare Element erzeugten Kraft drehbar. Insbesondere wird beim Betätigen des Hebels das elastisch verformbare Element elastisch bzw. weiter elastisch verformt. Die Führungsbahnen, Hebel, Drehbereiche der Eingriffselemente können dabei derart vorgesehen sein, dass bei einer Nebeneinanderanordnung der mindestens zwei Verbindungselemente und einer entsprechenden Nebeneinanderanordnung der Aufnahmebereiche eine durch die Hebel erforderliche Drehung zum Lösen der linken Verbindung im Uhrzeigersinn, d.h. im mathematisch negativen Drehsinn, und zum Lösen der rechten Verbindung der Hebel der rechten Verbindungsanordnung entgegen dem Uhrzeigersinn, d.h. im mathematisch positiven Drehsinn, erfolgt. Durch entgegensetzte Drehrichtungen der Hebel zum Lösen der beiden Verbindungsanordnungen ist eine einfache Handhabung des Zubehörteils möglich. Insbesondere kann ein seitlicher Zugang zu den Hebeln vorgesehen sein, so dass eine Bedienperson unter das Zubehörteil greifen und die vorzugsweise im verbundenen Zustand nach unten abstehenden Hebel in entgegengesetzte Richtungen auseinander zieht, so dass eine entsprechende Drehung der Hebel zum Lösen der beiden Verbindungen erfolgt.

Durch ein Verschwenken der Hebel können die Verbindungselemente auf einfache Art und Weise aus den Aufnahmebereichen herausbewegt bzw. herausgezogen werden.

Dabei ist es vorteilhaft, wenn die Drehachsen der Hebel parallel verlaufen und die Hebel zumindest in entgegengesetzte Drehrichtungen gedreht werden, um die Verbindungselemente aus den Aufnahmebereichen heraus zu bewegen.

In entgegengesetzter Drehrichtung können die Hebel dazu verwendet werden, die durch das elastisch verformte Element erzeugte Kraft, die über das jeweilige Eingriffselement und die Führungsbahn eingeleitet wird und die eine Kraft in Einführrichtung bewirkt, verstärkt wird. Dadurch kann ein eventuell noch vorhandenes Spiel, das nicht allein durch die durch das elastisch verformte Element in Einführrichtung bewirkte Kraft beseitigt wird, durch die zusätzlich mit Hilfe des Hebels erzeugte zusätzliche Kraft in Einführrichtung verringert oder beseitigt werden.

Ferner ist es vorteilhaft, wenn der Operationstisch eine Säule hat, auf der eine verstellbare Tischplatte lösbar befestigt ist. Die Tischplatte hat vorzugsweise eine Lagerfläche zur Lagerung eines Patienten. Der Operationstisch hat ferner eine Einrichtung zum Verschwenken der Tischplatte. Der Aufnahmebereich zur Aufnahme des Verbindungselements ist vorzugsweise in der Tischplatte oder in einem mit der Tischplatte verbundenen Element ausgebildet.

Wie bereits eingangs erwähnt, kann das Zubehörteil allgemein Kopflagerungszubehöre (wie z. B. eine Schädelklemme, eine Kopfplatte, etc.) eine Bein- oder Rückenplatte, ein Extensionsaggregat und/oder eine Rückenplatte umfassen.

Das Verfahren mit den Merkmalen eines unabhängigen Verfahrensanspruchs kann auf die gleiche Weise weitergebildet werden, wie für die erfindungsgemäße Anordnung angegeben. Insbesondere kann das Verfahren zum Verbinden eines Zubehörteils mit einem Operationstisch mit den Merkmalen der abhängigen Ansprüche bzw. entsprechenden Verfahrensschritten, weitergebildet werden.

Weitere Merkmale und Vorteile der Erfindung ergeben sich aus der folgenden Beschreibung, die in Zusammenhang mit den beigefügten Figuren die Erfindung anhand von Ausführungsbeispielen erläutert.

Es zeigen:
- Fig. 1: eine schematische perspektivische Darstellung einer Anordnung zum Verbinden eines Zubehörteils mit einem Operationstisch in einem getrennten Zustand;
- Fig. 2: eine weitere schematische perspektivische Darstellung der Anordnung nach Figur 1 beim Herstellen der Verbindung in einer ersten Position;
- Fig. 3: eine weitere schematische perspektivische Darstellung der Anordnung nach den Figuren 1 und 2 beim Herstellen einer Verbindung in einer zweiten Position;
- Fig. 4: eine weitere schematische perspektivische Darstellung der Anordnung nach den Figuren 1 bis 3 beim Herstellen einer Verbindung in einer dritten Position;
- Fig. 5: eine weitere schematische perspektivische Darstellung der Anordnung nach den Figuren 1 bis 4 im verbundenen Zustand;
- Fig. 6: eine weitere schematische perspektivische Darstellung der Anordnung zum Verbinden eines Zubehörteils mit einem Operationstisch nach den Figuren 1 bis 5 in einer ersten getrennten Position;
- Fig. 7: eine weitere schematische perspektivische Darstellung der Verbindungsanordnung nach den Figuren 1 bis 6 beim Herstellen der Verbindung;
- Fig. 8: eine perspektivische geschnittene Ansicht der Anordnung nach den Figuren 1 bis 7;
- Fig. 9: eine perspektivische Ansicht einer Buchse zur Aufnahme eines Verbindungselements;
- Fig. 10: eine zweite perspektivische Ansicht der Buchse nach Figur 9; und
- Fig. 11: eine dritte perspektivische Ansicht der Buchse nach den Figuren 9 und 10.

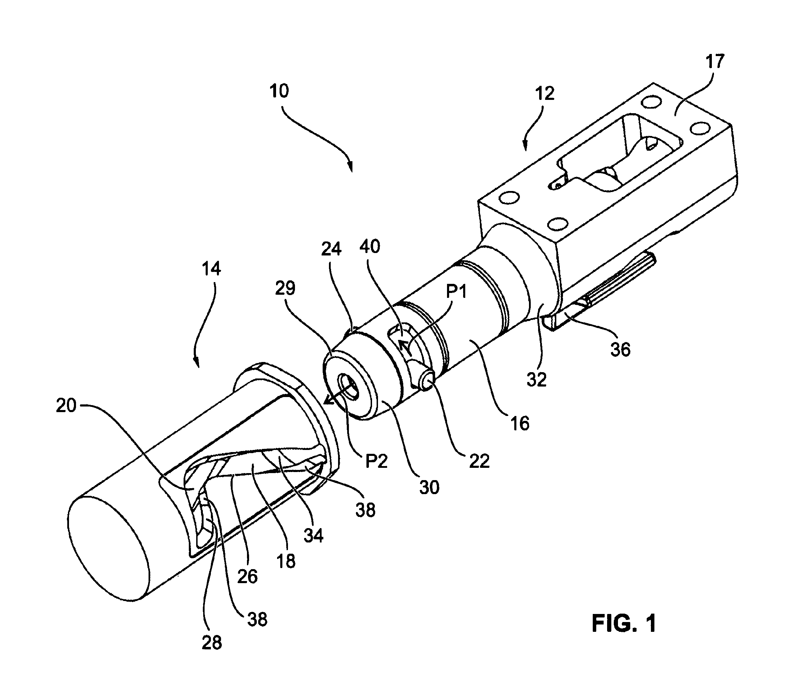

In Figur 1 ist eine schematisch perspektivische Darstellung einer erfindungsgemäßen Verbindungsanordnung 10 dargestellt. Die Verbindungsanordnung 10 umfasst ein erstes Verbindungselement 12 und ein zweites Verbindungselement 14. Bei diesem Ausführungsbeispiel ist das Verbindungselement 12 über eine Flanschplatte 17 mit einem nicht dargestellten Zubehörteil, insbesondere mit einer mit einem Operationstisch zu verbindenden Kopfplatte, verbunden. Das zweite Verbindungselement 14 ist im vorliegenden Ausführungsbeispiel in eine eine Operationstischlagerfläche bildende Tischplatte eingebracht. Vorzugsweise ist das zweite Verbindungselement 14 in eine stirnseitige Öffnung der Tischplatte eingebracht und dort vorzugsweise mit der Tischplatte verklebt, verschraubt oder auf andere geeignete Art und Weise verbunden. Alternativ kann das zweite Verbindungselement 14 als entsprechende Öffnung mit Führungsbahnen oder Führungsnuten ausgebildet sein, ohne dass ein separates Bauteil, wie das Verbindungselement 14 vorgesehen sein muss. Das Verbindungselement 14 ist im vorliegenden Ausführungsbeispiel als Buchse 14 ausgebildet, in die ein Verbindungszapfen 16 des ersten Verbindungselements 12 einführbar ist. In den Seitenwänden des zylindrischen Bereichs der Buchse 14 sind gegenüberliegend zwei Führungsbahnen 18, 20 ausgebildet, in die gegenüberliegende Eingriffselemente 22, 24, die seitlich aus dem Verbindungszapfen 16 heraus stehen, beim Einführen des Verbindungszapfens 16 in die Buchse 14 eingreifen.

Die einander gegenüberliegenden Führungsbahnen 18, 20 haben jeweils einen schräg ansteigenden Bereich 26 und einen schräg abfallenden Bereich 28. Beim Einführen des Verbindungszapfens 16 in die Buchse 14 wird durch nicht dargestellte Mittel eine Drehung des Verbindungszapfens 16 zur Buchse 14 verhindert, so dass die Eingriffselemente 22, 24 durch den schräg ansteigenden Bereich in Drehrichtung des Pfeils P1 gedreht werden und nach dem Erreichen des schräg abfallenden Bereichs 28 entgegengesetzt der Drehrichtung des Pfeils P1 gedreht werden. Bei der Drehung der Eingriffselemente 22, 24 in Richtung des Pfeils P1 wird ein im Inneren des Verbindungszapfens 16 angeordnetes elastisches Element (nicht dargestellt) elastisch verformt, das durch die elastische Verformung eine entgegen der Pfeilrichtung des Pfeils P1 gerichtete Kraft auf die Eingriffselemente 22, 24 ausübt.

Der Verbindungszapfen 16 hat an seinem in Einführrichtung vorderen Ende eine Fase 29 und einen konischen Bereich 30, die jeweils das Einführen des Verbindungszapfens 16 in die Buchse 14 erleichtern. Am gegenüberliegenden Ende des Verbindungszapfens 16 ist ein konischer, im vorliegenden Ausführungsbeispiel konkret kegelstumpfförmiger, Bereich 32 vorgesehen, der im verbundenen Zustand des ersten Verbindungselements 12 und des zweiten Verbindungselements 14 an einem zumindest in einem Teilbereich komplementär ausgebildeten Kontaktbereich 34 des zweiten Verbindungselements 14 zumindest teilweise anliegt und diesen kontaktiert. Dadurch wird die Lage des ersten Verbindungselements 12 relativ zum zweiten Verbindungselement 14 exakt festgelegt, wenn eine Kraft in Einführrichtung P2 auf das erste Verbindungselement 12 bei einer zwischen dem ersten und zweiten Verbindungselement 12, 14 hergestellten Verbindung wirkt.

Das erste Verbindungselement 12 hat ferner einen Betätigungshebel 36, der im vorliegenden Ausführungsbeispiel drehfest mit den Eingriffselementen 22, 24 verbunden ist. Durch Betätigen des Betätigungshebels 36 werden die Eingriffselemente 22, 24 aus der in Figur 1 dargestellten Lage in Richtung des Pfeils P1 bzw. bei einer anderen Lage der Eingriffselemente 22, 24 entgegen der Pfeilrichtung P1 gedreht. Die Eingriffselemente 22, 24 ragen durch eine längliche Öffnung 40, die in der Mantelfläche des zylindrischen Abschnitts des Verbindungszapfens 16 vorgesehen ist. Die längliche Öffnung 40 begrenzt den möglichen Drehbereich der Eingriffselemente 22, 24.

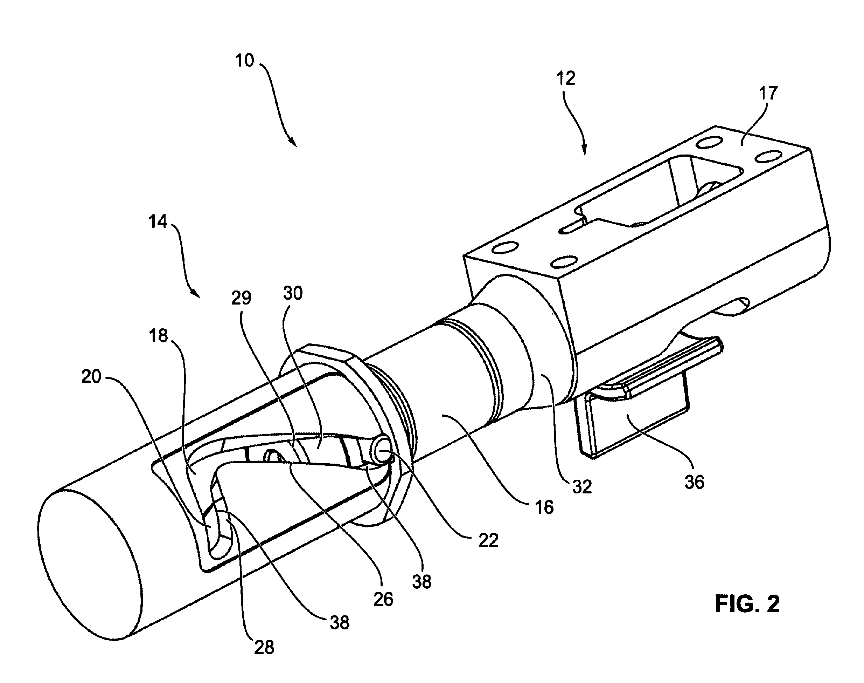

In Figur 2 ist eine weitere schematische perspektivische Darstellung der Anordnung 10 nach Figur 1 beim Herstellen der Verbindung in einer ersten Verbindungsposition gezeigt. Im Unterschied zu der in Figur 1 gezeigten Position des ersten Verbindungselements 12 und des zweiten Verbindungselements 14 ist der vordere Bereich des Verbindungszapfens 16 bereits in die Buchse 14 eingeführt und die Eingriffselemente 22, 24 greifen bereits in die Führungsbahnen 18, 20 ein. In dieser Position befinden sich die Eingriffselemente 22, 24 jedoch noch in der in Figur 1 gezeigten Endposition und sind noch nicht in Richtung des Pfeils P1 bewegt worden. Wie bereits erwähnt, stehen die Eingriffselemente 22, 24 mit einem elastisch verformbaren Element, wie einer Feder, in Eingriff, das vorzugsweise bereits in der in Figur 1 gezeigten Position der Eingriffselemente 22, 24 verformt ist bzw. vorgespannt ist, so dass durch die durch das elastisch verformte Element auf die Eingriffselemente 22, 24 ausgeübte Kraft die Eingriffselemente 22, 24 in der in Figur 1 gezeigten Lage gehalten werden.

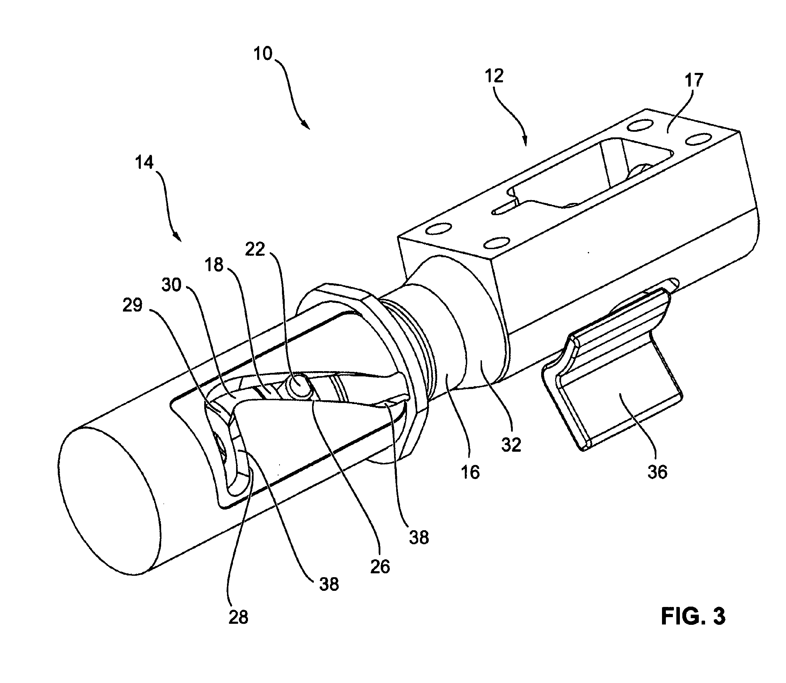

In Figur 3 ist eine weitere schematische perspektivische Darstellung der Anordnung 10 nach den Figuren 1 und 2 beim Herstellen der Verbindung zwischen dem ersten Verbindungselement 12 und dem zweiten Verbindungselement 14 gezeigt. Dabei ist der Verbindungszapfen 16 des ersten Verbindungselements 12 weiter in die Buchse 14 eingeführt worden, so dass die Eingriffselemente 22, 24 entlang der schräg ansteigenden Bereiche 26 der Führungsbahnen 18, 20 geführt werden. Wie bereits erwähnt, wird eine Drehung des ersten Verbindungselements 12 relativ zum zweiten Verbindungselement 14 durch weitere nicht dargestellte Elemente verhindert, so dass beim Entlanggleiten der Eingriffselemente 22, 24 an den schräg ansteigenden Bereichen 26 der Führungsbahnen 18, 20 in Pfeilrichtung des Pfeils P1 beim Einführen des Verbindungszapfens in die Buchse 14 gedreht werden. Durch die Drehung der Eingriffselemente 22, 24 um die Mittelachse des zylindrischen Verbindungszapfens 16 werden die Eingriffselemente 22, 24 in Pfeilrichtung des Pfeils P1 gedreht. Durch diese Drehung wird das elastisch verformbare Element verformt bzw. weiter verformt, so dass die durch das elastisch verformte Element auf die Eingriffselemente 22, 24 ausgeübte Kraft zunimmt, je weiter die Eingriffselemente 22, 24 an den schräg ansteigenden Bereichen 26 der Führungsbahnen 18, 20 in Einführrichtung P2 entlang geführt werden. Die Drehung der Eingriffselemente 22, 24 in Richtung des Pfeils P1 beim Einführen des Verbindungszapfens 16 in die Buchse 14 bewirkt auch ein Verschwenken des Betätigungshebels 36, da dieser mit den Eingriffselementen 22, 24 in einer drehfesten Verbindung steht.

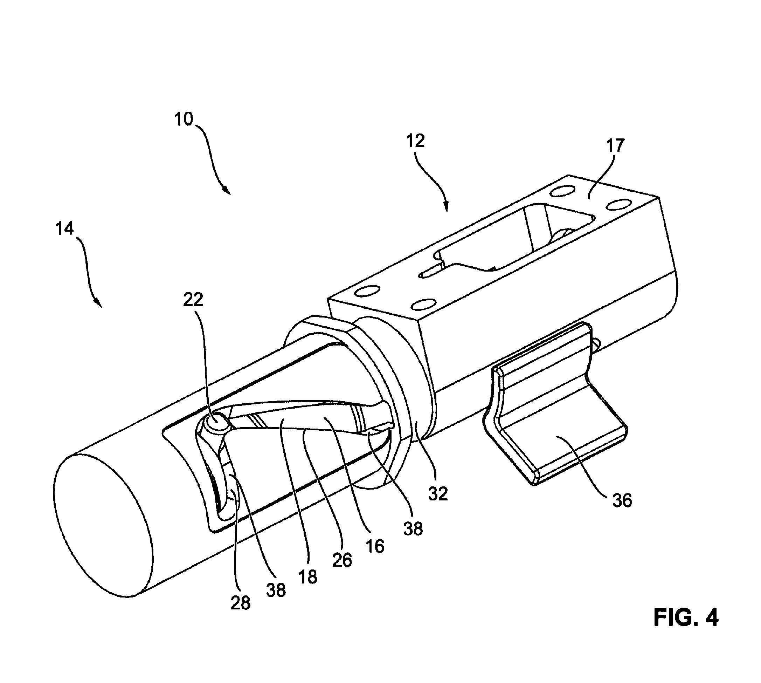

In Figur 4 ist eine weitere schematische perspektivische Darstellung der Anordnung 10 nach den Figuren 1 bis 3 beim Herstellen der Verbindung zwischen dem ersten Verbindungselement 12 und dem zweiten Verbindungselement 14 gezeigt. Gegenüber der in Figur 3 dargestellten Position ist der Verbindungszapfen 16 weiter in die Buchse 14 eingeführt worden, so dass die Eingriffselemente 22, 24 bis zum Ende des ansteigenden Bereichs der Führungsbahnen 18, 20 geführt wurden. In dieser Position ist der Betätigungshebel 36 maximal ausgelenkt.

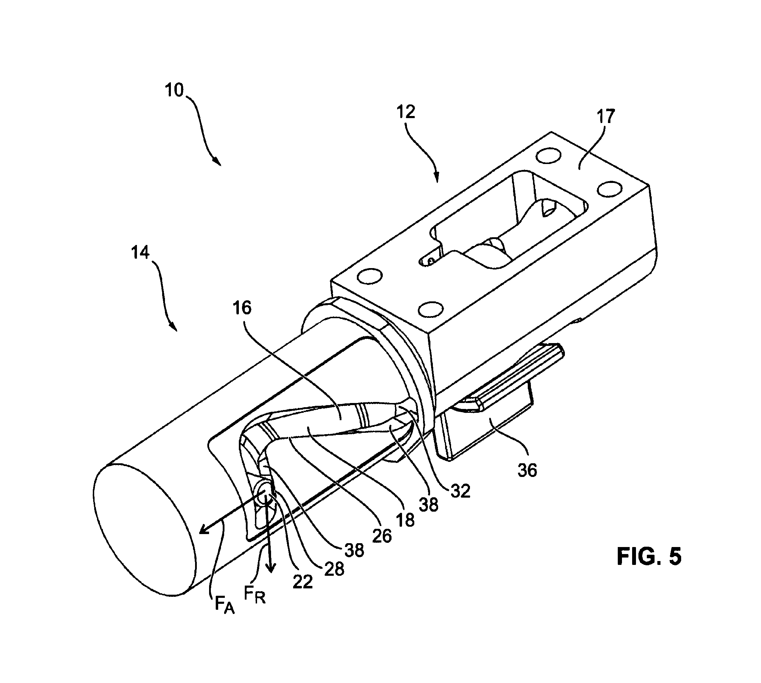

In Figur 5 ist eine weitere schematische perspektivische Darstellung der Anordnung 10 nach den Figuren 1 bis 4 in einer Position gezeigt, bei der die erfindungsgemäße Verbindung zwischen dem ersten Verbindungselement 12 und dem zweiten Verbindungselement 14 hergestellt ist. Gegenüber Figur 4 ist der Verbindungszapfen 16 weiter in die Buchse 14 hineingeschoben worden. Dadurch sind die Eingriffselemente 22, 24 weiter entlang der Führungsbahnen 18, 20 geführt worden, so dass sie an den schräg abfallenden Bereichen 28 der Führungsbahnen 18, 20 bis zu der in Figur 5 dargestellten Position entlang geführt worden sind. In dieser Position kontaktiert zumindest ein Teil der Oberfläche des konischen Bereichs 32 den komplementär ausgebildeten Kontaktbereich 34.

Gegenüber Figur 1 sind die Eingriffselemente in Richtung des Pfeils P1 gedreht, so dass das elastisch verformbare Element elastisch verformt ist und eine Kraft auf die Eingriffselemente 22, 24 entgegengesetzt der Pfeilrichtung P1 ausübt. Diese Kraft drückt die Eingriffshebel 22, 24 gegen die Flanke 38 der Führungsbahnen 18, 20 im schräg abfallenden Bereich 28. Diese auf den schräg abfallenden Bereich 28 wirkende Kraft lässt sich in eine radiale Kraftkomponente F_{R} und in eine axiale Kraftkomponente F_{A} zerlegen. Die Kraftkomponente F_{A} wirkt in Einführrichtung P2 auf den Verbindungszapfen 16 und somit auf das Verbindungselement 12, so dass dieses weiter in die Buchse 14 hinein gezogen wird, wobei der konische Bereich 32 gegen die Kontaktfläche 34 gedrückt wird. Dadurch wird ein Spiel zwischen dem ersten Verbindungselement 12 und dem zweiten Verbindungselement 14 vermieden.

Die durch die Eingriffselemente 22, 24 auf die Flanke 38 im schräg abfallenden Bereich 28 der Führungsbahnen 18, 20 ausgeübte Kraft kann durch eine kurzzeitige Betätigung des Betätigungshebels 36 vergrößert werden, wodurch die Kraft F_{A} temporär vergrößert wird und ein ggf. noch vorhandenes Spiel zwischen dem ersten Verbindungselement 12 und dem zweiten Verbindungselement 14 beseitigt wird. Die durch das elastisch verformte Element auf die Eingriffselemente 22, 24 ausgeübte Kraft ist zumindest so groß zu bemessen, dass das erste Verbindungselement 12 sicher in dem zweiten Verbindungselement 14 gehalten wird, ohne dass beim bestimmungsgemäßen Gebrauch des Zubehörteils (nicht dargestellt) und des Operationstisches (nicht dargestellt) eine so große Kraft auf das erste Verbindungselement 12 entgegengesetzt der Einführrichtung P2 ausgeübt wird, dass erneut ein Spiel zwischen dem ersten Verbindungselement 12 und dem zweiten Verbindungselement 14 entsteht.

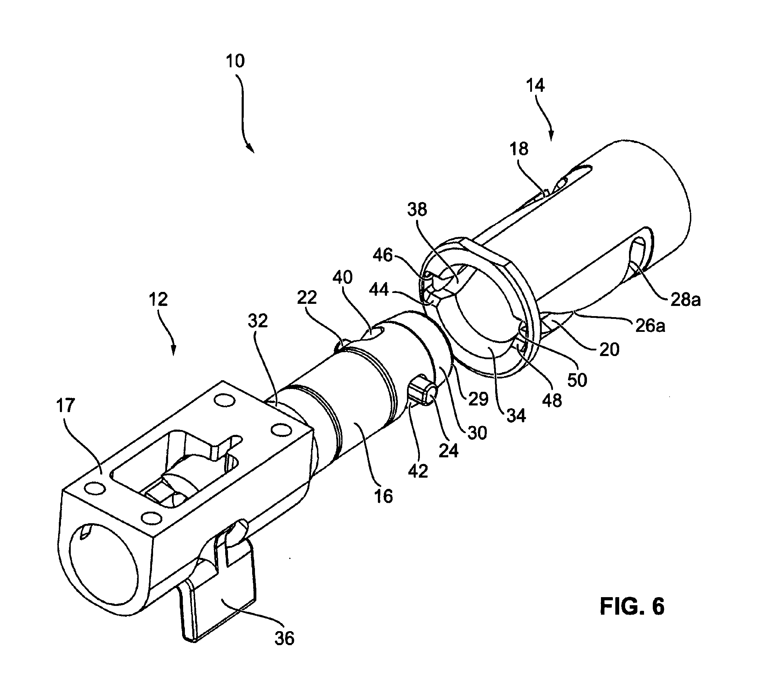

In Figur 6 ist eine weitere schematische perspektivische Darstellung der Anordnung 10 zum Verbinden eines Zubehörteils mit einem Operationstisch nach den Figuren 1 bis 5 in einer anderen perspektivischen Darstellung gezeigt. Bei dieser Darstellung ist zu erkennen, dass das Eingriffselement 24 durch eine Öffnung 42 im zylindrischen Bereich des Verbindungszapfens 16 ragt. Ferner ist in Figur 6 zu erkennen, dass im Einführbereich der Buchse 14 die Führungsbahnen 18, 20 durch Schrägen 44, 46, 48, 50 verbreitert sind, so dass das Einführen der Eingriffselemente 22, 24 in die Führungsbahnen 18, 20 erleichtert ist.

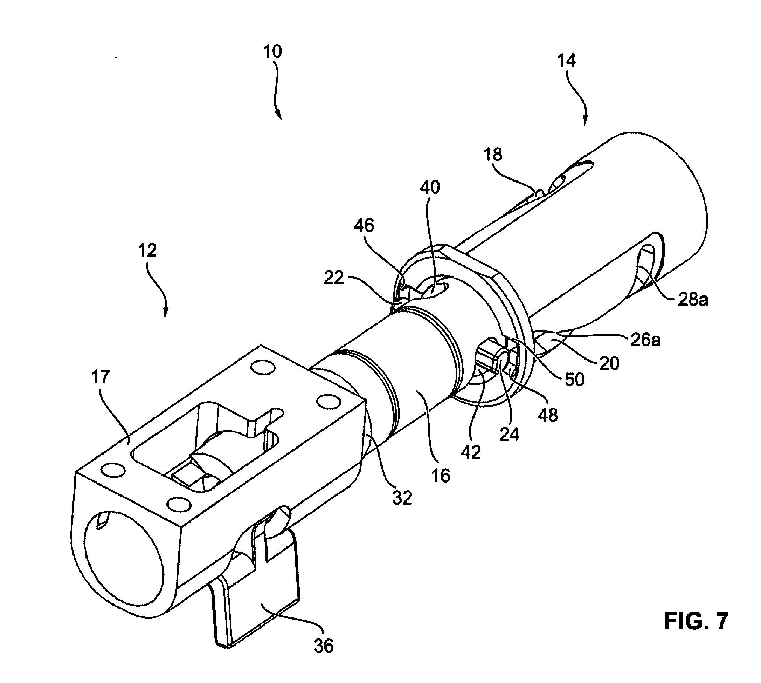

In Figur 7 ist eine weitere schematische perspektivische Darstellung der Verbindungsanordnung 10 nach den Figuren 1 bis 6 dargestellt, bei der der konische Bereich 30 des Verbindungszapfens 16 bereits in die Buchse 14 eingeführt ist und die Eingriffselemente 22, 24 noch außerhalb der Buchse 14 angeordnet sind und somit noch nicht in Eingriff mit den Führungsbahnen 18, 20 stehen.

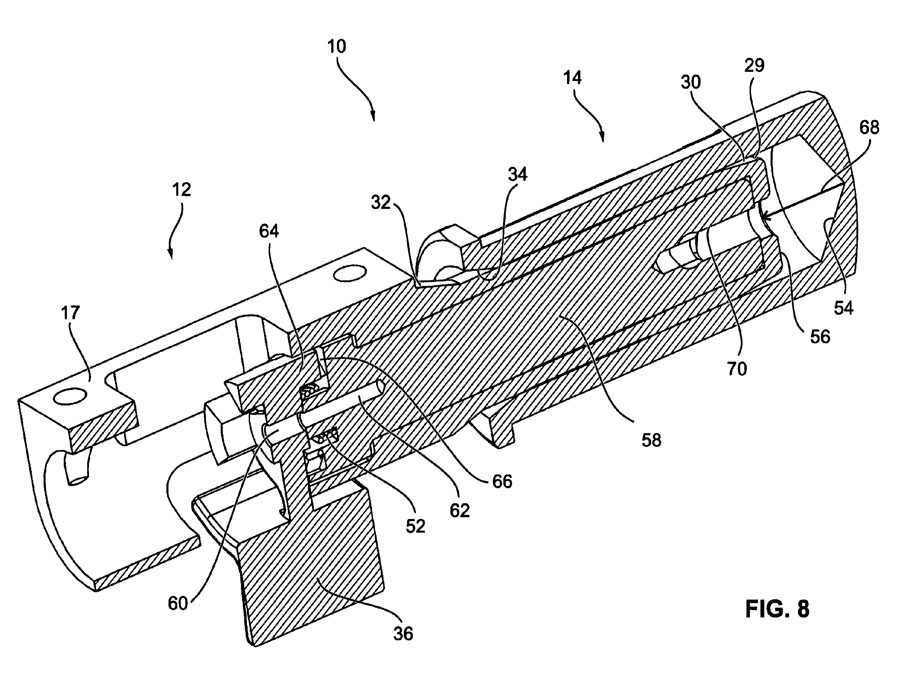

In Figur 8 ist eine perspektivisch geschnittene Ansicht des ersten Verbindungselements 12 gezeigt. In dieser geschnittenen Darstellung ist eine als elastisch verformbares Element dienende Feder 52 sichtbar, die bei einer Drehung der Eingriffselemente 22, 24 in Richtung des Pfeils P1 gespannt bzw. weiter gespannt wird. Der konische Bereich 32 und der komplementäre Bereich 34 dienen im verbundenen Zustand als Anschlag, der ein weiteres Einführen des Verbindungszapfens 16 in die Buchse 14 verhindert. Alternativ oder zusätzlich kann ein solcher Anschlag auch durch den inneren Stirnbereich 54 und die Stirnseite 56 des Verbindungszapfens 16 gebildet sein. Dieser kann dann entweder als reiner Längenanschlag durch eine Längenbegrenzung oder alternativ oder zusätzlich durch seitliche Kontaktpunkte zum Zentrieren des Verbindungszapfens 16 in der Buchse 14 ausgebildet sein.

Der Betätigungshebel 36 ist wie bereits erwähnt, drehfest mit den Eingriffselementen 22, 24 verbunden. Dazu ist der Betätigungshebel 36 über eine Schraubverbindung mit einem inneren Zylinder 58 des ersten Verbindungselements 12 verbunden. Dazu ist im Betätigungshebel 36 ein Durchgangsloch 60 vorgesehen und im inneren Zylinder 58 ein Sackloch 62, in dem ein Innengewinde ausgebildet ist, in das die Gewindegänge einer nicht dargestellten Schraube, die durch das Durchgangsloch 60 geführt ist, geschraubt wird. Zur drehfesten Verbindung greift ferner ein Eingriffselement 64 des Betätigungshebels 36 in eine komplementäre Eingriffsöffnung 66 des inneren Zylinders 58.

Die Eingriffselemente 22, 24 sind im vorliegenden Ausführungsbeispiel durch einen zylindrischen Stab gebildet, der durch ein quer zur Längsachse des inneren Zylinders 58 ausgebildetes Durchgangsloch gesteckt ist. Dieser zylindrische Stab wird durch eine durch ein Durchgangsloch 68 im äußeren Verbindungszapfen 16 und ein in einem inneren Loch 70 im inneren Zylinder 58 vorgesehenes Gewinde geschraubten Schraube fixiert, wobei die vordere Stirnseite der nicht dargestellten Schraube auf den zylindrischen Stift der Eingriffselemente 22, 24 drückt und diesen im inneren Zylinder 58 fixiert. Durch den in Figur 8 gezeigten einfachen Aufbau des ersten Verbindungselements 12 ist auch eine einfache und kostengünstige Montage des Verbindungselements 12 möglich.

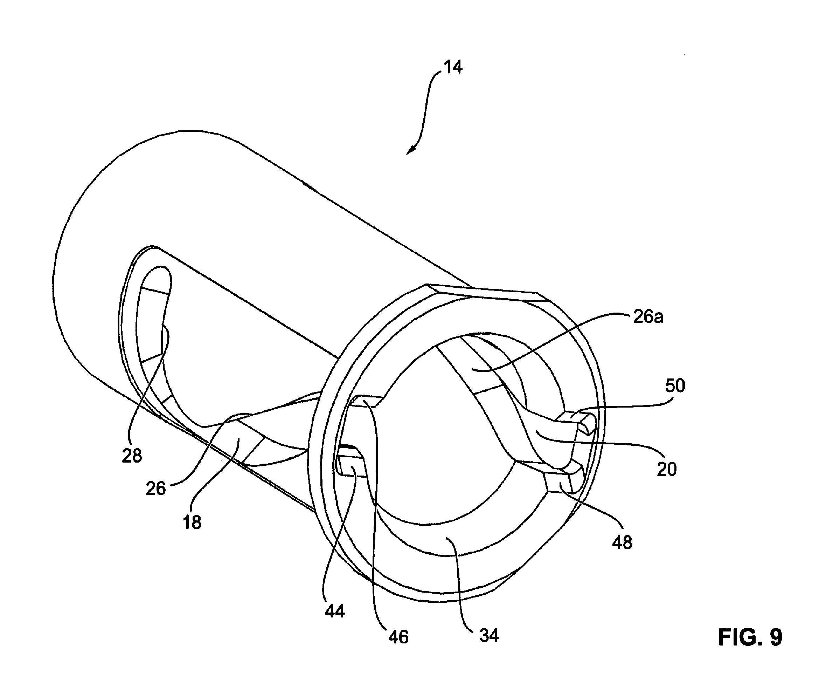

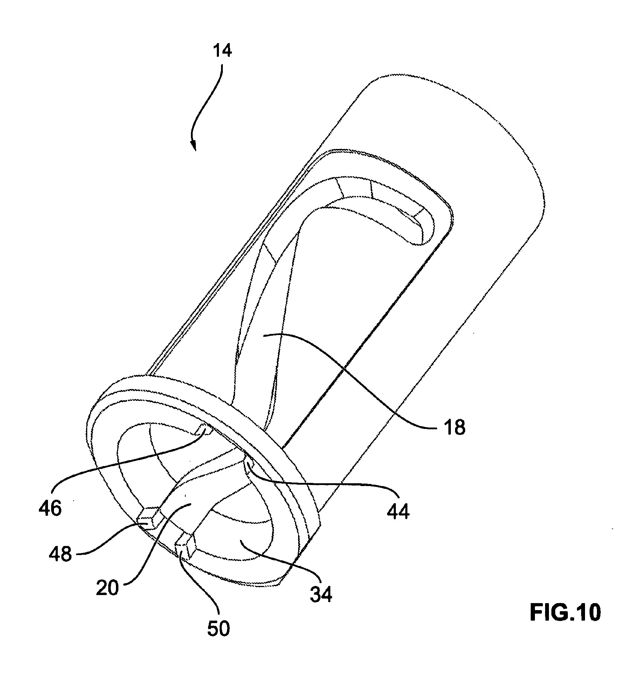

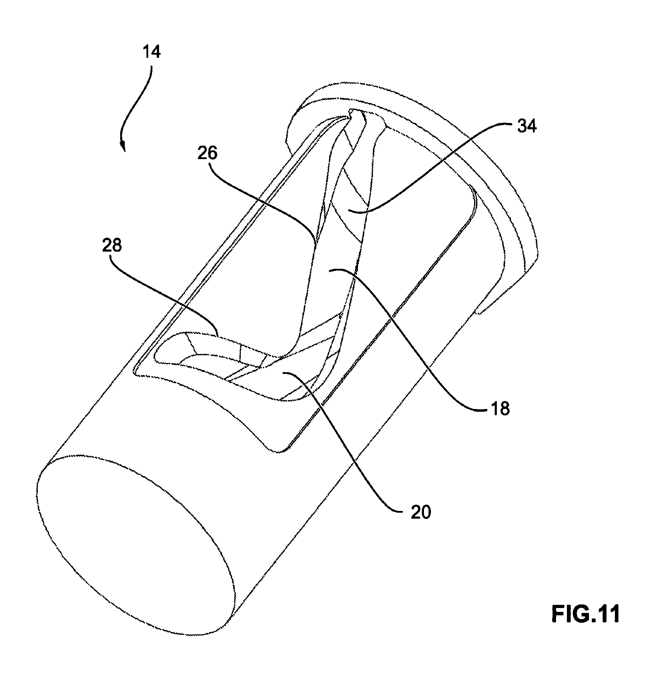

In den Figuren 9 bis 11 sind weitere perspektivische Ansichten der Buchse 14 gezeigt.

## Patentansprüche

1. Anordnung (10) zum Verbinden eines Zubehörteils mit einem Operationstisch, umfassend ein Zubehörteil und ein Bauteil für einem Operationstisch
wobei das Zubehörteil ein Verbindungselement (12) hat,
wobei das Bauteil einen Aufnahmebereich (14) zur Aufnahme zumindest eines Bereichs des Verbindungselements (12) hat,
wobei ein Eingriffselement (22, 24) seitlich aus dem Verbindungselement (12, 16) vorsteht,
wobei der Aufnahmebereich (14) eine Führungsbahn (18, 20) hat, in der das Eingriffselement (22, 24) beim Einführen zumindest eines Bereichs des Verbindungselements (12, 16) in den Aufnahmebereich (14) eingreift, und
wobei ein elastisch verformbares Element (52) bei dessen Verformung eine Kraft auf das Eingriffselement (22, 24) ausübt,
**dadurch gekennzeichnet, dass** durch die auf das Eingriffselement (22, 24) ausgeübte Kraft und durch den Verlauf der Führungsbahn (18, 20) bei einer Verbindung zwischen dem Zubehörteil (12) und dem Bauteil (14) eine Kraft (F_{A}) in Einführrichtung (P2) auf das Verbindungselement (12, 16) wirkt.

2. Anordnung nach Anspruch 1, **dadurch gekennzeichnet, dass** das Verbindungselement (12, 16) als Zapfen (16) ausgebildet ist und dass der Aufnahmebereich als Buchse (14) ausgebildet ist, in die der Zapfen (16) einführbar ist.

3. Anordnung nach Anspruch 2, **dadurch gekennzeichnet, dass** das in die Buchse (14) einzuführende Ende (30) des Zapfens (16) verjüngt ist, vorzugsweise eine umlaufende Fase (29) hat.

4. Anordnung nach einem der vorhergehenden Ansprüche, **dadurch gekennzeichnet, dass** die in Einführrichtung wirkende Kraft einen ersten Kontaktbereich (32, 56) des Verbindungselements (12) und/oder des Zubehörteils gegen einen zweiten Kontaktbereich (34, 54) des Aufnahmebereichs (14) drückt.

5. Anordnung nach Anspruch 4, **dadurch gekennzeichnet, dass** der erste Kontaktbereich (32) oder der zweite Kontaktbereich (34) durch zumindest einen Teil der Mantelfläche eines Kegelstumpfs gebildet sind, dessen Längsachse parallel zur Einführrichtung (P2) verläuft, und dass der jeweils andere Kontaktbereich (32, 34) zumindest in einem Teilbereich komplementär zur Mantelfläche des Kegelstumpfs ausgebildet ist.

6. Anordnung nach einem der vorhergehenden Ansprüche, **dadurch gekennzeichnet, dass** die Führungsbahn (18, 20) einen ersten ansteigenden Bereich (26, 26a) hat, durch den beim Einführen des Verbindungselements (16) in den Aufnahmebereich (14) eine Drehung des Eingriffselements (22, 24) um eine parallel zur Einführrichtung (P2) verlaufenden Drehachse in eine erste Drehrichtung (P1) erfolgt, wobei das elastisch verformbare Element (52) beim Drehen des Eingriffselements (22, 24) in die erste Drehrichtung (P1) verformt wird, und dass die Führungsbahn (18, 20) einen zweiten abfallenden Bereich (28, 28a) hat, sodass das Eingriffselement (22, 24) nach dem Passieren des ersten Bereichs (26, 26a) in eine zur ersten Drehrichtung (P1) entgegengesetzten zweiten Drehrichtung gedreht wird, wobei das elastisch verformte Element (52) eine Kraft über das Eingriffselement (22, 24) und die Führungsbahn auf den Aufnahmebereich (14) ausübt, wobei diese durch den zweiten abfallenden Bereich (28, 28a)der Führungsbahn (18, 20) in eine axiale Kraft (F_{A}) in Einführrichtung (P2) und in eine radiale Kraft (F_{R}) in die zweite Drehrichtung (P1) zerlegt wird, wobei durch die in Einführrichtung (P2) wirkende Kraft (F_{A}) das Verbindungselement (12, 16) im Aufnahmebereich (14) gehalten und/oder in den Aufnahmebereich (14) hineingezogen wird.

7. Anordnung nach einem der Ansprüche 1 bis 5, **dadurch gekennzeichnet, dass** die Führungsbahn (18, 20) zumindest einen abfallenden Bereich (28, 28a) hat, wobei das Eingriffselement (22, 24) beim Einführen des Verbindungselements (12) in den Aufnahmebereich (14) in der Führungsbahn (18, 20) geführt ist,
dass das Verbindungselement (12, 16) beim Einführen in den Aufnahmebereich (14) um eine parallel zur Einführrichtung (P2) angeordnete Drehachse drehbar ist,
dass eine Drehung des Verbindungselements (12) beim Kontakt des Eingriffselements (22, 24) mit dem abfallenden Bereich (28, 28a) der Führungsbahn (18, 20) in die zweite Drehrichtung erfolgt,
dass beim Drehen des Verbindungselements (12, 16) eine Verformung des elastisch verformbaren Elements (52) erfolgt,
dass das Verbindungselement (12, 16) nach dessen Drehung derart arretierbar ist, dass es zumindest nicht in eine zur zweiten Drehrichtung entgegengesetzten ersten Drehrichtung (P1) drehbar ist, wobei das elastisch verformte Element (52) eine Kraft auf die Führungsbahn (18, 20) ausübt, durch die eine Kraft (F_{A}) in Einführrichtung (P2) auf das Verbindungselement (12, 16) wirkt.

8. Anordnung nach einem der vorhergehenden Ansprüche, **dadurch gekennzeichnet, dass** ein Hebel (36) vorgesehen ist, der drehfest mit dem Eingriffselement (22, 24) verbunden ist, dass zum Lösen der Verbindung zwischen dem Verbindungselement (12, 16) und dem Aufnahmebereich (14) das Eingriffselement (22, 24) mit Hilfe des Hebels (36) in die erste Drehrichtung (P1) drehbar ist, so dass beim Betätigen des Hebels (36) das Verbindungselement (12, 16) entgegen der Einführrichtung (P2) aus dem Aufnahmebereich (14) bewegbar ist.

9. Anordnung nach einem der vorhergehenden Ansprüche, **dadurch gekennzeichnet, dass** der Operationstisch eine Säule, eine lösbar auf dieser befestigte, verstellbare Tischplatte mit Lagerfläche und eine Einrichtung zum Verschwenken der Tischplatte umfasst, und dass
der Aufnahmebereich in der Tischplatte oder in einem mit der Tischplatte verbundenen Element ausgebildet ist, und
dass das Zubehörteil eine Kopfplatte, eine Schädelklemme, eine Beinplatte, ein Extensionsaggregat und/oder eine Rückenplatte umfasst.

10. Verfahren zum Verbinden eines Zubehörteils mit einem Operationstisch,
bei dem ein Verbindungselement (12, 16) des Zubehörteils in einen in einem Bauteil des Operationstischs vorhandenen Aufnahmebereich (14) eingeführt wird, wobei der Aufnahmebereich (14) zum Verbinden des Zubehörteils mit dem Operationstisch zumindest einen Bereich des Verbindungselements (12, 16) aufnimmt,
bei dem beim Einführen des zumindest einen Bereichs des Verbindungselements (12, 16) in den Aufnahmebereich (14) ein seitliches aus dem Verbindungselement vorstehendes Eingriffselement (22, 24) in eine Führungsbahn (18, 20) des Aufnahmebereichs (14) eingreift, und
bei dem ein elastisch verformbares Element (52) elastisch verformt wird, wobei durch das elastisch verformte Element (52) eine Kraft auf das Eingriffselement (22, 24) ausgeübt wird,
**dadurch gekennzeichnet, dass** durch die auf das Eingriffselement (22, 24) ausgeübte Kraft und durch den Verlauf der Führungsbahn (18, 20) bei einer Verbindung zwischen dem Zubehörteil und dem Operationstisch eine in Einführrichtung (P1) wirkende Kraft (F_{A}) auf das Verbindungselement (12, 16) ausgeübt wird.

## Claims

1. An arrangement (10) for connecting an accessory part to an operating table, comprising an accessory part and a component part for an operating table,
wherein the accessory part has a connecting element (12),
wherein the component part has a receiving area (14) for receiving at least an area of the connecting element (12),
wherein an engagement element (22, 24) projects laterally from the connecting element (12, 16),
wherein the receiving area (14) has a guideway (18, 20) with which the engagement element (22, 24) engages during the insertion of at least an area of the connecting element (12, 16) into the receiving area (14), and
wherein an elastically deformable element (52), when deformed, exerts a force on the engagement element (22, 24),
**characterized in that** by means of the force exerted on the engagement element (22, 24) and by the course of the guideway (18, 20) a force (F_{A}) acts in the direction of insertion (P2) on the connecting element (12, 16) when the accessory part (12) and the component part (14) are connected.

2. The arrangement according to claim 1, **characterized in that** the connecting element (12, 16) is formed as a pin (16) and **in that** the receiving area is formed as a bushing (14) into which the pin (16) is insertable.

3. The arrangement according to claim 2, **characterized in that** the end (30) of the pin (16) to be inserted into the bushing (14) is tapered, preferably has a circumferential chamfer (29).

4. The arrangement according to one of the preceding claims, **characterized in that** the force acting in the direction of insertion presses a first contact area (32, 56) of the connecting element (12) and/or of the accessory part against a second contact area (34, 54) of the receiving area (14).

5. The arrangement according to claim 4, **characterized in that** the first contact area (32) or the second contact area (34) are formed by at least a part of the circumferential surface of a conical frustum, the longitudinal axis of which runs parallel to the direction of insertion (P2), and **in that** the respective other contact area (32, 34) is formed at least in a partial area complementarily to the circumferential surface of the conical frustum.

6. The arrangement according to one of the preceding claims, **characterized in that** the guideway (18, 20) has a first rising area (26, 26a) by which, upon insertion of the connecting element (16) into the receiving area (14), a rotation of the engagement element (22, 24) about an axis of rotation running parallel to the direction of insertion (P2) in a first direction of rotation (P1) takes place, wherein the elastically deformable element (52) is deformed upon rotation of the engagement element (22, 24) in the first direction of rotation (P1), and **in that** the guideway (18, 20) has a second falling area (28, 28a) so that the engagement element (22, 24) is rotated in a second direction of rotation opposite to the first direction of rotation (P1) after passing the first area (26, 26a), wherein the elastically deformed element (52) exerts a force on the receiving area (14) via the engagement element (22, 24) and the guideway, wherein this force is split up into an axial force (F_{A}) in the direction of insertion (P2) and into a radial force (F_{R}) in the second direction of rotation (P1) by the second falling area (28, 28a) of the guideway (18, 20), wherein by the force (F_{A}) acting in the direction of insertion (P2) the connecting element (12, 16) is held in the receiving area (14) and/or pulled into the receiving area (14).

7. The arrangement according to one of the claims 1 to 5, **characterized in that** the guideway (18, 20) has at least a falling area (28, 28a), wherein the engagement element (22, 24) is guided in the guideway (18, 20) during insertion of the connecting element (12) into the receiving area (14),
**in that** the connecting element (12, 16) is rotatable about an axis of rotation arranged parallel to the direction of insertion (P2) upon insertion into the receiving area (14),
**in that** the connecting element (12) is rotated in the second direction of rotation when the engagement element (22, 24) contacts the falling area (28, 28a) of the guideway (18, 20),
**in that** upon rotation of the connecting element (12, 16) the elastically deformable element (52) is deformed,
**in that** the connecting element (12, 16) is lockable after rotation such that it is at least not rotatable in a first direction of rotation (P1) opposite to the second direction of rotation, the elastically deformable element (52) exerting a force on the guideway (18, 20) by which a force (F_{A}) acts on the connecting element (12, 16) in the direction of insertion (P2).

8. The arrangement according to one of the preceding claims, **characterized in that** a lever (36) is provided which is connected to the engagement element (22, 24) in a rotationally fixed manner, **in that** for releasing the connection between the connecting element (12, 16) and the receiving area (14) the engagement element (22, 24) is rotatable in the first direction of rotation (P1) by means of the lever (36) so that upon actuation of the lever (36) the connecting element (12, 16) is movable out of the receiving area (14) opposite to the direction of insertion (P2).

9. The arrangement according to one of the preceding claims, **characterized in that** the operating table comprises a column, an adjustable table plate releasably mounted thereon and having a support surface, and a device for pivoting the table plate, and **in that** the receiving area is formed in the table plate or in an element connected to the table plate, and
**in that** the accessory part comprises a head plate, a skull clamp, a leg plate, an extension aggregate and/or a back plate.

10. A method for connecting an accessory part to an operating table,
in which a connecting element (12, 16) of the accessory part is inserted into a receiving area (14) provided in a component part of the operating table, wherein the receiving area (14) receives at least an area of the connecting element (12, 16) for connecting the accessory part to the operating table,
in which during insertion of the at least one area of the connecting element (12, 16) into the receiving area (14) an engagement element (22, 24) projecting laterally from the connecting element engages with a guideway (18, 20) of the receiving area (14), and
in which an elastically deformable element (52) is elastically deformed, a force being exerted on the engagement element (22, 24) by the elastically deformable element (52),
**characterized in that** by means of the force exerted on the engagement element (22, 24) and by the course of the guideway (18, 20) a force (F_{A}) acting in the direction of insertion (P1) is exerted on the connecting element (12, 16) when the accessory part and the operating table are connected.

## Revendications

1. Ensemble (10) permettant de relier un accessoire à une table d'opération, comprenant un accessoire et un élément pour une table d'opération,
l'accessoire présentant un élément de liaison (12),
l'élément présentant une zone de logement (14) destinée à loger au moins une zone de l'élément de liaison (12),
un élément encastrable (22, 24) faisant saillie latéralement de l'élément de liaison (12, 16),
la zone de logement (14) présentant une bande de guidage (18, 20) dans laquelle l'élément encastrable (22, 24) s'encastre lorsqu'au moins une zone de l'élément de liaison (12, 16) est introduite dans la zone de logement (14), et
un élément déformable élastiquement (52) dont la déformation exerce une force sur l'élément encastrable (22, 24),
**caractérisé en ce que** du fait de la force exercée sur l'élément encastrable (22, 24) et du fait du tracé de la bande de guidage (18, 20) lorsque l'accessoire (12) et l'élément (14) sont reliés, une force (F_{A}) agit dans le sens d'introduction (P2) sur l'élément de liaison (12, 16).

2. Ensemble selon la revendication 1, **caractérisé en ce que** l'élément de liaison (12, 16) est réalisé sous la forme d'un tourillon (16) et **en ce que** la zone de logement est réalisée sous la forme d'un coussinet (14) dans lequel le tourillon (16) peut être introduit.

3. Ensemble selon la revendication 2, **caractérisé en ce que** l'extrémité (30) du tourillon (16) destinée à être introduite dans le coussinet (14) est rétrécie et présente de préférence un chamfrein (29) périphérique.

4. Ensemble selon l'une quelconque des revendications précédentes, **caractérisé en ce que** la force agissant dans le sens d'introduction presse une première zone de contact (32, 56) de l'élément de liaison (12) et/ou de l'accessoire contre une seconde zone de contact (34, 54) de la zone de logement (14).

5. Ensemble selon la revendication 4, **caractérisé en ce que** la première zone de contact (32) ou la seconde zone de contact (34) est formée par au moins une partie de la surface d'un cône tronqué dont l'axe longitudinal s'étend parallèlement au sens d'introduction (P2), et **en ce que** l'autre zone de contact (32, 34), au moins dans une certaine zone, est complémentaire de la surface du cône tronqué.

6. Ensemble selon l'une quelconque des revendications précédentes, **caractérisé en ce que** la bande de guidage (18, 20) présente une première zone montante (26, 26a) à travers laquelle, lorsque l'élément de liaison (16) est introduit dans la zone de logement (14), l'élément encastrable (22, 24) est amené en rotation autour d'un axe de rotation s'étendant parallèlement au sens d'introduction (P2) dans un premier sens de rotation (P1), l'élément déformable élastiquement (52) étant déformé lors de la rotation de l'élément encastrable (22, 24) dans le premier sens de rotation (P1), et **en ce que** la bande de guidage (18, 20) présente une seconde zone descendante (28, 28a), de sorte que l'élément encastrable (22, 24), après être passé par la première zone (26, 26a), est amené en rotation dans un second sens de rotation opposé au premier sens de rotation (P1), l'élément déformable élastiquement (52) exerçant une force sur la zone de logement (14) par l'intermédiaire de l'élément encastrable (22, 24) et de la bande de guidage, ladite force étant décomposée par la seconde zone descendante (28, 28a) de la bande de guidage (18, 20) en une force axiale (F_{A}) dans le sens d'introduction (P2) et en une force radiale (F_{R}) dans le second sens de rotation (P1), l'élément de liaison (12, 16) étant retenu dans la zone de logement (14) et/ou étant rentré de force dans la zone de logement (14) par la force (F_{A}) agissant dans le sens d'introduction (P₂).

7. Ensemble selon l'une quelconque des revendications 1 à 5, **caractérisé en ce que** la bande de guidage (18, 20) présente au moins une zone descendante (28, 28a), l'élément encastrable (22, 24), lors de l'introduction de l'élément de liaison (12) dans la zone de logement (14), étant guidé dans la bande de guidage (18, 20),
**en ce que** l'élément de liaison (12, 16), lors de l'introduction dans la zone de logement (14), peut être amené en rotation autour d'un axe de rotation disposé parallèlement au sens d'introduction (P2),
**en ce qu'**une rotation de l'élément de liaison (12), lorsque l'élément encastrable (22, 24) est en contact avec la zone descendante (28, 28a) de la bande de guidage (18, 20), s'effectue dans le second sens de rotation,
**en ce que** lors de la rotation de l'élément de liaison (12, 16), l'élément déformable élastiquement (52) se déforme,
**en ce que** l'élément de liaison (12, 16), après sa rotation, peut être bloqué de telle manière qu'il ne peut au moins pas être amené en rotation dans un premier sens de rotation (P1) opposé au second sens de rotation, l'élément (52) déformé élastiquement exerçant sur la bande de guidage (18, 20) une force par l'intermédiaire de laquelle une force (F_{A}) agit dans le sens d'introduction (P2) sur l'élément de liaison (12, 16).

8. Ensemble selon l'une quelconque des revendications précédentes, **caractérisé en ce qu'**un levier (36) est relié solidaire en rotation à l'élément encastrable (22, 24), **en ce que** pour libérer la liaison entre l'élément de liaison (12, 16) et la zone de logement (14), l'élément encastrable (22, 24) peut être amené en rotation dans le premier sens de rotation (P1) à l'aide du levier (36), de sorte que lorsque le levier (36) est actionné, l'élément de liaison (12, 16) peut être déplacé à l'encontre du sens d'introduction (P2) à l'extérieur de la zone de logement (14).

9. Ensemble selon l'une quelconque des revendications précédentes, **caractérisé en ce que** la table d'opération comporte une colonne, un dessus réglable fixé de manière détachable à ladite colonne et pourvu d'une surface d'appui, et un dispositif permettant de faire pivoter le dessus de table, et **en ce que** la zone de logement est formée dans le dessus de table ou dans un élément relié au dessus de table, et
**en ce que** l'accessoire englobe une têtière, un clamp crânien, une plaque jambière, un groupe d'extension et/ou une plaque dorsale.

10. Procédé permettant de relier un accessoire à une table d'opération,
selon lequel un élément de liaison (12, 16) de l'accessoire est introduit dans une zone de logement (14) présente dans un élément de la table d'opération, la zone de logement (14) destinée à la liaison de l'accessoire à la table d'opération logeant au moins une zone de l'élément de liaison (12, 16),
selon lequel, lors de l'introduction de la ou des zones de l'élément de liaison (12, 16) dans la zone de logement (14), un élément encastrable (22, 24) latéral faisant saillie de l'élément de liaison s'encastre dans une bande de guidage (18, 20) de la zone de logement (14), et
selon lequel un élément déformable élastiquement (52) est déformé élastiquement, une force étant exercée sur l'élément encastrable (22, 24) par l'élément (52) déformé élastiquement,
**caractérisé en ce que** du fait de la force exercée sur l'élément encastrable (22, 24) et du fait du tracé de la bande de guidage (18, 20), lors d'une liaison entre l'accessoire et la table d'opération, une force (F_{A}) agissant dans le sens d'introduction (P1) est exercée sur l'élément de liaison (12, 16).
